# EUROPÄISCHE PATENTSCHRIFT

(11) **EP 2 469 125 B1**
(45) Veröffentlichungstag und Bekanntmachung des Hinweises auf die Patenterteilung: **09.10.2013**
(21) Anmeldenummer: 11010154.0
(22) Anmeldetag: 22.12.2011
(51) Int. Cl.: F16H 3/093, B60K 6/48, B60K 6/547

(54) **Automatisches, insbesondere automatisiertes Schaltgetriebe für ein Kraftfahrzeug**
Automatic, in particular automated, gearbox for a motor vehicle
Boîte de vitesses automatique, notamment automatisée, pour un véhicule automobile

(30) Priorität: 22.12.2010 DE 102010055643
(43) Veröffentlichungstag der Anmeldung: 27.06.2012
(73) Patentinhaber: Volkswagen Aktiengesellschaft, 38440 Wolfsburg (DE)
(72) Erfinder: Meißner, Christian, 38122 Braunschweig (DE); Petersen, Rainer, 38444 Wolfsburg (DE); Sue, Armin, Dr., 38527 Meine (DE); Lutz, Andreas, 38100 Braunschweig (DE); Möckel, Jörg, 38524 Sassenburg (DE)

(56) Entgegenhaltungen:
- EP-B1- 1 505 316
- DE-A1- 19 926 416
- JP-A- 9 086 202
- JP-A- 2007 030 750

## Beschreibung

Die Erfindung betrifft ein automatisches, insbesondere automatisiertes Schaltgetriebe für ein Kraftfahrzeug, mit mindestens einer Antriebswelle und mit mindestens einer Abtriebswelle, wobei zusätzlich eine erste und eine zweite Vorlegewelle vorgesehen sind und die einzelnen Achsen der Antriebswelle, der Abtriebswelle und der ersten und der zweiten Vorlegewelle zueinander parallel verlaufend angeordnet sind, wobei die Antriebswelle, die erste und zweite Vorlegewelle und die Abtriebswelle jeweils ein erstes und ein zweites Zahnrad aufweisen und die jeweils ersten Zahnräder zumindest teilweise in einer ersten Radebene und die jeweils zweiten Radräder zumindest teilweise in einer zweiten Radebene angeordnet sind, und wobei einige der Zahnräder als Festräder und die anderen Zahnräder als Losräder ausgebildet sind.

Im Stand der Technik sind unterschiedliche ausgebildete Getriebe bereits bekannt, bspw. sogenannte Handschaltgetriebe, automatisierte Getriebe, Doppelkupplungsgetriebe sowie Automatikgetriebe.

Schaltgetriebe für Fahrzeuge werden zur Drehzahl- und Drehmomentwandlung zwischen dem Motor des Fahrzeugs und den Fahrzeugrädern eingesetzt. Mit einer höheren Anzahl der schaltbaren Gänge bzw. Gangstufen kann der Motor, insbesondere der Verbrennungsmotor in einem verbrauchsgünstigeren Arbeitspunkt betrieben werden. Im Gegenzug steigen mit dem konstruktiven Aufwand auch meist der Bauraumbedarf und die Masse des Getriebes. Die Praxis zeigt, dass ein "ausgewogenes Verhältnis" bei PKW-Anwendungen hier bei sechs Gängen liegt.

So weisen Handschaltgetriebe für jeden Gang bzw. für jede Gangstufe ein Räderpaar, d. h. zwei Zahnräder und mindestens ein Schaltelement (gegebenenfalls mit Synchronisation) auf. Bei einem Gangwechsel wird immer ein Schaltelement geöffnet und ein anderes Schaltelement geschlossen. Um am Handschalthebel die beim Fahrer etablierte H-Schaltung zu ermöglichen, werden insbesondere zwei benachbarte Gänge von einem doppelt wirkenden Schaltelement betätigt. Prinzipiell lässt sich jedes Handschaltgetriebe auch durch Schaltroboter automatisieren. Bei neu konzipierten, automatisierten Getrieben hingegen sind diese Zwänge nicht mehr vorhanden. So können z. B. auch mehrere Schaltelemente beim Gangwechsel gleichzeitig betätigt werden oder die Zahnräder- Paarungen auch mehrfach genutzt werden (sog. Windungsgetriebe).

Bei den im Stand der Technik bekannten Dopplungskupplungsgetrieben sind für die zugkraftunterbrechungsfreie Schaltung zwei getrennte Leistungspfade einerseits für die geraden und andererseits für die ungeraden Gänge erforderlich. Somit ist jedes Doppelkupplungsgetriebe auch quasi ein automatisiertes Getriebe mit dieser zusätzlichen Bedingung. Prinzipiell ist daher der Bauraumbedarf eines automatisierten Getriebes nicht größer als der eines Doppelkupplungsgetriebes, wenn auf die zugkraftunterbrechungsfreie Schaltung verzichtet wird.

Im Stand der Technik sind Automatikgetriebe bekannt, die einerseits Planetengetriebe und andererseits reibschlüssige Schaltelemente aufweisen. Da hier die Trennung des Leistungsflusses durch eine Kupplung und die Synchronisation von formschlüssigen Schaltelementen entfällt, sind derartige Getriebe lastschaltfähig, d. h. diese ermöglichen eine zugkraftunterbrechungsfreie Schaltung, auch wenn sie keine getrennten Leistungspfade aufweisen. Unter dem Gesichtspunkt, dass Stirnradgetriebe einen Sonderfall von Planetenradgetrieben, nämlich mit ruhendem Planetenträger darstellen, lässt sich auch jedes Automatikgetriebe als automatisiertes Getriebe in Planetenradbauweise darstellen. Aufgrund der koaxialen Bauart von Planetengetrieben sind diese besser für einen axialen großen und radial kleinen Bauraum geeignet, wie z. B. im Längseinbau. Für den Quereinbau werden seit kurzem Kombinationen von Planetengetrieben und Stirnradgetrieben verwendet.

Zur Emmisionsreduzierung werden zusätzlich zum Motor, also zum Verbrennungsmotor auch Elektromotoren eingesetzt. Diese Elektromotoren können seriell, parallel oder über ein Planetengetriebe stufenlos gekoppelt sein. Die Vorteile von Verbrauchs- und CO₂-Emmisionssenkungen, kleineren Verbrennungsmotoren, kurzzeitiger Leistungssteigerung (Boosten) und Bremsenenergierückgewinnung (Rekuperieren) werden umso größer, je leistungsstärker der Elektromotor ist. Solche Elektromotoren weisen aber meist einen großen radialen Bauraum auf und können daher im Motorraum nur axial zum Getriebe platziert werden. Im Gegenzug muss aber das für einen Hybrid-Antrieb konzipierte Getriebe eine axial kurze Baulänge aufweisen. Insbesondere im zuletzt erwähnten Zusammenhang sind daher axial kurze Baulängen von Getrieben sehr erwünscht.

Im Stand der Technik, von dem die Erfindung ausgeht, ist ein lastschaltbares mehrgängiges Wendegetriebe bekannt (DE 102 59 424 A1), bei dem zur Realisierung der Gangstufen und der Übertragung des Drehmomentes von der Antriebswelle auf die Abtriebswelle mindestens drei weitere Vorlegewellen vorgesehen sind. Die einzelnen Achsen der Antriebswelle, der Abtriebswelle sowie der hier vorgesehenen drei weiteren Vorlegewellen verlaufen im Wesentlichen parallel zueinander, wobei jede der Vorlegewellen und die Abtriebswelle mindestens zwei Zahnräder aufweisen, wobei jeweils ein Zahnrad als Festrad und das andere Zahnrad als Losrad mit einem zugeordneten Schaltelement ausgebildet ist. Mit diesem im Stand der Technik bekannten Getriebe lassen sich drei Vorwärts- und drei Rückwärtsgänge realisieren, wobei jeweils die ersten Zahnräder der Vorlegewellen bzw. der Abtriebswellen teilweise in einer ersten Radebene und die jeweils zweiten Zahnräder der jeweiligen Vorlegewelle bzw. der Abtriebswelle teilweise in einer zweiten Radebene angeordnet sind.

Allerdings ist dieses im Stand der Technik bekannte und zuvor beschriebene Wendegetriebe, von dem die Erfindung ausgeht, noch nicht optimal ausgebildet. Einerseits weist dieses Getriebe nämlich nur drei Vorwärts- und drei Rückwärtsgänge auf, wobei, um die Anzahl der Vorwärtsgänge zu erhöhen, eine weitere Getriebeeinheit in axialer Richtung zusätzlich vorgesehen werden muss, d. h. der Bauraum des Getriebes in axialer Länge entsprechend vergrößert werden muss. Weiterhin ist der Bauraumbedarf dieses bekannten Getriebes in radialer Richtung, insbesondere aufgrund der vorgesehenen separaten vier Vorlegewellen ebenfalls äußerst groß. Das bekannte Getriebe weist daher weder die notwendige Flexibilität, nämlich die notwendige Anzahl von Gangstufen, noch eine gewünschte axial kurze Bauform sowie auch keine radial optimierte Bauform auf.

Schließlich ist aus der gattungsgemäßen EP 1 505 316 B1 auch ein Parallelwellengetriebe bekannt, das neben einer Antriebs- und einer Abtriebswelle drei Vorlegewellen aufweist, wobei auf jeder Vorlegewelle mehrere, sequentiell hintereinander angeordnete Zahnräder bzw. Zahnradpaarungen vorgesehen sind, wodurch das Getriebe einen axial großen Baumraum benötigt.

Der Lehre der Erfindung liegt daher die Aufgabe zugrunde, das eingangs genannte Getriebe, von dem die Erfindung ausgeht, derart auszugestalten und weiterzubilden, dass ein großer axialer Bauraum vermieden ist, die Flexibilität des Getriebes, insbesondere die Anzahl der Gangstufen erhöht ist, sowie das Getriebe insbesondere auch zur Anbindung einer Elektromaschine geeignet ist.

Diese zuvor aufgezeigte Aufgabe wird nun dadurch gelöst, dass alle der jeweils ersten Zahnräder in einer ersten Radebene und alle der jeweils zweiten Zahnräder in einer zweiten Radebene angeordnet sind, und dass die Zahnräder und/oder Wellen so angeordnet und/ oder ausgebildet sind, dass die Zahnräder jeder Radebene eine geschlossene Kette bilden. Durch die Kombination dieser Merkmale werden entscheidende Vorteile erzielt. Zunächst kann nun ein axial sehr kurz bauendes Schaltgetriebe realisiert werden, insbesondere dann, wenn die Anzahl der Radebenen reduziert ist, insbesondere wie hier nun nur noch zwei Radebenen, nämlich eine erste und eine zweite Radebene vorgesehen sind. Um aber die Flexibilität des Schaltgetriebes zu erhöhen, insbesondere sechs Gänge bzw. Gangstufen vorsehen zu können, ist die Anzahl der Wellen erhöht, insbesondere sind hier nun eine erste und zweite Vorlegewelle zusätzlich zur Antriebswelle und zur Abtriebswelle vorgesehen. Beim Schalten der jeweiligen Gangstufen werden die entsprechenden Zahnradpaarungen mehrfach genutzt, was im Folgenden noch erläutert werden wird. Da aber nun die Zahnräder in beiden Radebenen eine geschlossene Kette bilden, können einige belastete Zahneingriffe vermieden werden, wodurch der Wirkungsgrad des Schaltgetriebes erhöht ist. Aufgrund der Realisierung von nur zwei Radebenen ist hinsichtlich der Bauraumgeometrie und auch hinsichtlich der Montierbarkeit ein verbessertes Schaltgetriebe realisiert, bei dem die Anbindung/Ankopplung einer E-Maschine bzw. eines Elektromotors erleichtert und sehr sinnvoll ist, was im folgenden noch erläutert werden darf. Im Ergebnis sind die eingangs genannten Nachteile vermieden und entsprechende Vorteile erzielt.

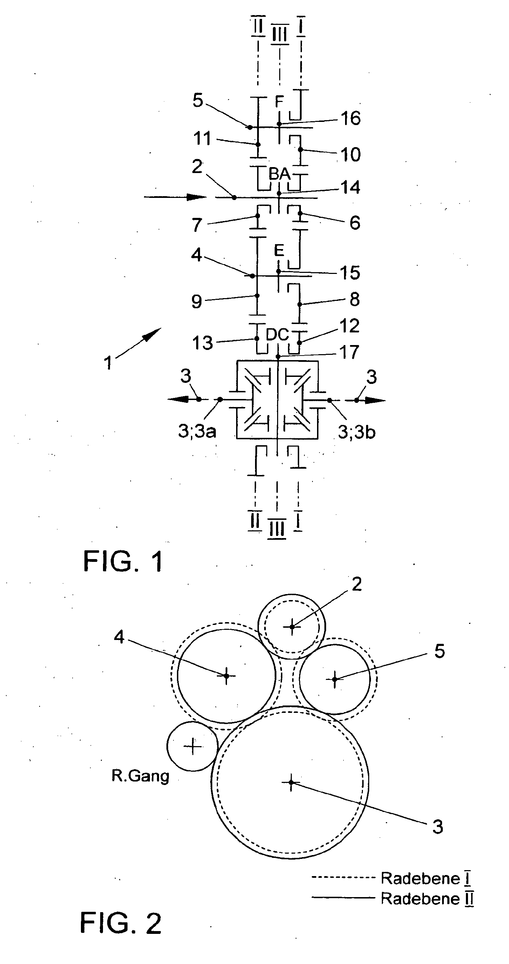

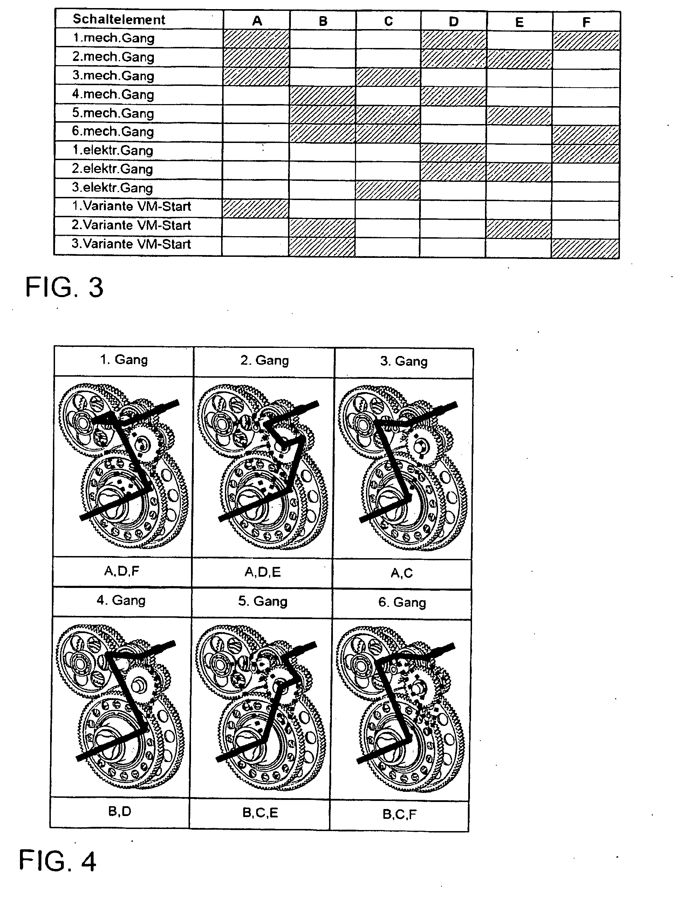

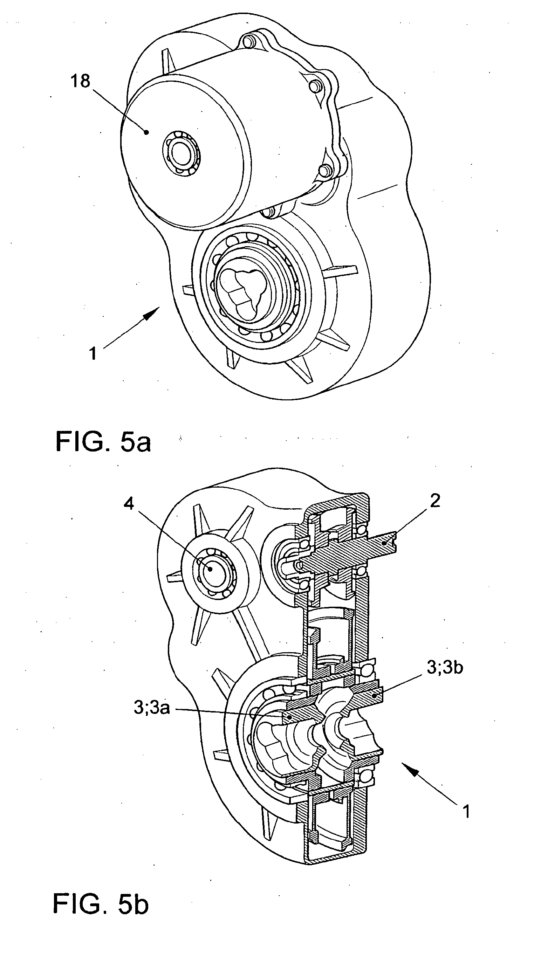

Es gibt nun eine Vielzahl von Möglichkeiten, das erfindungsgemäße Schaltgetriebe in vorteilhafter Art und Weise auszugestalten und weiterzubilden. Hierfür darf zunächst auf den Patentanspruch 1 und auf die nachgeordneten Patentansprüche verwiesen werden. Im Folgenden wird nun eine bevorzugte Ausführungsform des erfindungsgemäßen Schaltgetriebes anhand der folgenden Beschreibung und der Zeichnung näher erläutert. In der Zeichnung zeigt
- Fig. 1: in einer schematischen Darstellung die Getriebestruktur des Schaltgetriebes, hier insbesondere für ein automatisiertes Sechs-Gang-Schaltgetriebe, mit der Anordnung der jeweiligen Wellen, der Zahnräder und der Schaltelemente im Schnitt,
- Fig. 2: die entsprechende Lage/Anordnung der einzelnen Wellen und/oder Zahnräder in schematischer Darstellung von der Seite,
- Fig. 3: die Schaltlogiktabelle für alle mechanischen und elektrischen Gänge sowie für den Start des Verbrennungsmotors bei der Anbindung einer E-Maschine (direkt) an das kleine Zahnrad der Antriebswelle, in schematischer Darstellung, sowie
- Fig. 4: die bestehenden Leistungsflüsse durch das Schaltgetriebe in den einzelnen Gängen, d. h. bei Schaltung der jeweiligen Gangstufen gemäß der Schaltlogiktabelle aus Fig. 3 in schematischer Darstellung, und
- Fig. 5a, 5b: die Anbindung einer Elektromaschine, teils in schematischer Darstellung, an die Antriebswelle des Schaltgetriebes, einerseits im montierten (Fig. 5a), andererseits im demontierten Zustand (Fig. 5b):
Insbesondere die Fig. 1 und die Fig. 2, teilweise aber auch die Fig. 4 bzw. 5 zeigen ein automatisches, insbesondere automatisiertes Schaltgetriebe 1 für ein hier nicht im Einzelnen dargestelltes Kraftfahrzeug. Das Schaltgetriebe 1 weist mindestens eine Antriebswelle 2 und mindestens eine Abtriebswelle 3 auf. Zusätzlich ist eine erste und zweite Vorlegewelle 4 und 5 vorgesehen. Die Achsen der Antriebswelle 2, der Abtriebswelle 3 sowie der ersten und zweiten Vorlegewelle 4 und 5 verlaufen im Wesentlichen parallel zueinander bzw. sind parallel zueinander verlaufend angeordnet, wie aus den Fig. 1 und Fig. 2 ersichtlich ist. Hierbei ist die Abtriebswelle 3 unterteilt in zwei Teilwellen 3a bzw. 3b eines Differentials.

Wie insbesondere die Fig. 1 zeigt, weist die Antriebswelle 2, die erste und die zweite Vorlegewelle 4 und 5 sowie die Abtriebswelle 3 jeweils ein erstes und ein zweites Zahnrad auf. Bei der in Fig. 1 dargestellten bevorzugten Ausführungsform des Schaltgetriebes 1 weist die Antriebswelle 2 ein erstes Zahnrad 6 und ein zweites Zahnrad 7, die erste Vorlegewelle 4 ein erstes Zahnrad 8 und ein zweites Zahnrad 9, die zweite Vorlegewelle 5 ein erstes Zahnrad 10 und ein zweites Zahnrad 11 und die Abtriebswelle 3 ein erstes Zahnrad 12 und ein zweites Zahnrad 13 auf. Die Zahnräder 6 bis 13 sind gut ersichtlich und schematisch in Fig. 1 erkennbar. Hierbei sind einige der Zahnräder als Festräder und andere Zahnräder als Losräder ausgebildet, was im Folgenden noch näher erläutert werden darf.

Die eingangs genannten Nachteile sind nun dadurch zu vermieden, dass alle der jeweils ersten Zahnräder 6,8,10 und 12 in einer ersten Radebene I und alle der jeweils zweiten Zahnräder 7, 9, 11 und 13 in einer zweiten Radebene II angeordnet sind, und dass die Zahnräder 6 bis 13 und/oder die Wellen 2 bis 5 so angeordnet und/oder ausgebildet sind, dass die Zahnräder 6, 8, 10, 12 bzw. 7, 9, 11, 13 jeder Radebene I bzw. II eine geschlossene Kette bilden. Hierbei ist mit dem Ausdruck "geschlossene Kette" gemeint, dass die jeweiligen Zahnräder der jeweiligen Radebene so miteinander drehend wirksam in Eingriff stehen, dass, wenn ein Zahnrad dieser Kette drehend bewegt wird bzw. sich bewegt auch die übrigen Zahnräder dieser Kette entsprechend der jeweiligen Übersetzungen mitbewegt werden. Anders ausgedrückt, ein jeweiliges Zahnrad einer Kette steht immer mit zwei weiteren Zahnrädern entsprechend im Eingriff, so wie insbesondere aus aus Fig. 2 ersichtlich.

Die hier aus den Fig. 1 und Fig. 2 ersichtliche Getriebestruktur des Schaltgetriebes 1 weist insgesamt sechs Vorwärtsgänge bzw. sechs Vorwärtsgangstufen auf, die mit Hilfe von vier Wellen, nämlich der Antriebswelle 2, der Abtriebswelle 3, der ersten und zweiten Vorlegewelle 4 und 5 und mit insgesamt acht Zahnrädern 6 bis 13, die vorzugsweise als Stirnräder ausgeführt sind und in zwei unterschiedlichen Radebenen I und II angeordnet sind, realisiert sind. Wie die Figur zeigt, können die vier Wellen 2 bis 5 äußerst kompakt angeordnet werden, wenn der "Wellenzug" eine entsprechend geschlossene Kette der jeweiligen Zahnräder in den jeweiligen Radebenen I bzw. II bildet. In Fig. 2 ist die geschlossene Kette der Radebene I der jeweiligen Zahnräder 6, 8, 10 und 12 als gestrichelte Linien dargestellt, wobei mit den durchgezogenen Linien die Radebene II und das Ineinandergreifen der jeweiligen zweiten Zahnräder 7, 9, 11 und 13 dargestellt ist, was die eingangs genannten Vorteile mit sich bringt.

Weiterhin sind die Wellen 2 bis 5 und die Zahnräder 6 bis 13, insbesondere bzgl. der Wahl der Zähnezahlen so ausgebildet, so dass der jeweilige Achsabstand der jeweiligen Wellen zueinander für die erste sowie auch für die zweite Radebene I bzw. II identisch ist. Gut erkennbar ist dieses schematisch dargestellt in Fig. 2, wo gut ersichtlich ist, dass für die hier gestrichelte dargestellte Radebene I bzw. die mit den durchgezogenen Linien dargestellte Radebene II der Abstand der jeweiligen Wellen, hier der Antriebswelle 2 zu der ersten und zweiten Vorlegewelle 4 bzw. 5 für die beiden Radebenen I und II identisch sind. Gleiches gilt für den jeweiligen Achsabstand der ersten und zweiten Vorlegewelle 4 und 5 zur Abtriebswelle 3 bzw. für den Abstand der Antriebswelle 2 zur Abtriebswelle 3.

Wichtig ist auch, dass beim Schließen der Kette der ersten Radebene I und beim Schließen der Kette der zweiten Radebene II das Verzahnungsgesetz "Zahn in Lücke" in beiden Radebenen I bzw. II gleichzeitig erfüllt ist. Hierdurch kann nun der Leistungsfluss von der Antriebswelle 2 auf die Abtriebswelle 3 in unterschiedliche Pfade "aufgeteilt" werden. Hierdurch kann weiterhin die Belastung einiger Zahnräder verringert werden, was sich positiv auf den Bauraum und die Masse des Schaltgetriebes 1 auswirkt. Insbesondere fließt aufgrund von Bauteilelastizitäten immer der größere Teil der Leistung auch über den Pfad mit der höheren Steifigkeit, was meist der Pfad mit der geringeren Anzahl der Zahneingriffe, d. h. den geringeren Verlusten ist. Dadurch stellt sich in jedem Gang bzw. in jeder Gangstufe der größtmögliche Wirkungsgrad ein.

Der Kraftfluss ist nun entsprechend steuerbar. Das hier dargestellte Schaltgetriebe 1 weist vorzugsweise sechs Gangstufen, also sechs Vorwärtsgänge auf, wobei zur Realisierung von sechs unterschiedlichen Gangstufen entsprechende Schaltelemente 14, 15, 16 und 17 angesteuert werden und diese Schaltelemente 14 bis 17 in einer Schaltelement-Ebene III angeordnet sind. Zusätzlich kann zur Realisierung einer Rückwärtsgangstufe "R-Gang" eine weitere Welle und ein entsprechend angeordnetes Rückwärtsgang-Zahnrad vorgesehen sein, wie dies auch aus der Fig. 2 ersichtlich ist.

Bei der hier dargestellten bevorzugten Ausführungsform ist das Schaltelement 14 im Bereich der Antriebswelle 2 zwischen dem dortigen ersten und zweiten Zahnrad 6 und 7 vorgesehen, wobei hier diese beiden Zahnräder 6 und 7 als Losräder ausgebildet sind und mit Hilfe des Schaltelementes 14 drehfest mit der Antriebswelle 2 verbunden werden können.

Das Schaltelement 15 ist im Bereich der ersten Vorlegewelle 4 zwischen den dortigen Zahnrädern 8 und 9 vorgesehen, wobei hier das erste Zahnrad 8 als Losrad ausgebildet ist und mit Hilfe des Schaltelementes 15 mit der ersten Vorlegewelle 4 drehwirksam verbunden werden kann.

Das Schaltelement 16 ist im Bereich der zweiten Vorlegewelle 5 zwischen den dortigen Zahnrädern 10 und 11 vorgesehen, wobei das erste Zahnrad 10 als Losrad ausgeführt ist und mit Hilfe des Schaltelementes 16 wirksam mit der zweiten Vorlegewelle 5 verbunden werden kann.

Das Schaltelement 17 ist zwischen den Zahnrädern 12 und 13 der Abtriebswelle 3 vorgesehen, die jeweils beide als Losräder ausgebildet sind, um das jeweilige Zahnrad 12 bzw. 13 wirksam mit der Abtriebswelle 3 verbinden zu können.

Das erste und zweite Zahnrad 6 und 7 der Antriebswelle 3 ist daher vzw. jeweils als Losrad ausgeführt, wobei das erste Zahnrad 8 der ersten Vorlegewelle 4 als Losrad und das zweite Zahnrad 9 als Festrad ausgeführt ist. Weiterhin ist das erste Zahnrad 10 der zweiten Vorlegewelle 5 als Losrad und das zweite Zahnrad 11 als Festrad ausgebildet. Schließlich sind das erste und zweite Zahnrad 12 und 13 der Abtriebswelle 3 jeweils als Losrad ausgeführt, wobei diese beiden Losräder insbesondere zugleich auch Komponenten eines Differenzials darstellen bzw. als solche ausgeführt sind. Als Schaltelemente 14 bis 17 können insbesondere Schiebemuffen oder auch hydraulische Aktuatoren oder dergleichen dienen. Dies ist abhängig von jeweiligen Anwendungsfall.

Die Fig. 1 zeigt auch die jeweiligen Innenseiten A, B, C, D, E und F der jeweiligen Zahnräder 6, 7, 12, 13, 8 und 10, die mit dem jeweiligen Schaltelement 14, 17, 15 bzw. 16, je nachdem ob das jeweilige Schaltelemente sich nach rechts oder links bewegt, koppelbar oder entkoppelbar sind, um den Kraftfluss auf die entsprechende Welle 2 bis 5 zu übertragen.

Aus der in Fig. 3 dargestellten Schaltlogiktabelle ist insbesondere in Verbindung mit der Fig. 4 die Einlegung bzw. die Realisierung der einzelnen Gangstufen vom ersten bis zum sechsten Gang gut nachvollziehbar. Der in der jeweiligen Gangstufe realisierte primäre Kraftfluss, d. h. der mit dem größeren Leistungsanteil ist in der Fig. 4 durch die jeweils durchgezogene starke Linie nochmals schematisch dargestellt, die dortige gestrichelte Linie verdeutlicht den sekundären Kraftfluss, d. h. den Kraftfluss mit dem geringeren Leistungsanteil. Im dritten und vierten Gang können je nach Bauteilelastizität auch der primäre und sekundäre Kraftfluss vertauscht sein, da eine Aufteilung der Antriebsleistung nahezu zu gleichen Teilen erfolgt.

Für den Fall dass, wie aus Fig. 3 ersichtlich, das Schaltelement 14 mit der Innenseite A des erstens Zahnrades 6 und das Schaltelement 17 mit der Innenseite D des zweites Zahnrades 13 sowie das Schaltelement 16 mit der Innenseite F des erstens Zahnrades 10 wirksam gekoppelt ist, läuft der primäre Kraftfluss im ersten Gang, also in der ersten Gangstufe von der Antriebswelle 2 über das erste Zahnrad 6 über das erste Zahnrad 10 auf die zweite Vorlegewelle 5 und von hier aus über das zweite Zahnrad 11 und das zweite Zahnrad 13 auf die Abtriebswelle 3.

Für die Realisierung des zweiten Ganges bzw. der zweiten Gangstufe ist das Schaltelement 14 mit der Innenseite A des ersten Zahnrades 6 und das Schaltelement 17 mit der Innenseite D des zweiten Zahnrades 13 sowie das Schaltelement 15 mit der Innenseite E des ersten Zahnrades 8 entsprechend gekoppelt. Der primäre Kraftfluss läuft dann über die Antriebswelle 2, das dortige erste Zahnrad 6, über das erste Zahnrad 8 auf die erste Vorlegewelle 4 und von dort über das zweite Zahnrad 9 auf das zweite Zahnrad 13 der Abtriebswelle 3.

Zur Realisierung des dritten Gangs bzw. der dritten Gangstufe, ist das Schaltelement 14 mit der Innenseite A des ersten Zahnrades 6 gekoppelt und das Schaltelement 17 mit der Innenseite C des ersten Zahnrades 12 gekoppelt. Der primäre Kraftfluss läuft dann von der Antriebswelle 2 über das dortige erste Zahnrad 6 und das erste Zahnrad 8 der ersten Vorlegewelle 4 auf das erste Zahnrad 12 der Abtriebswelle 3.

Zur Realisierung des vierten Ganges bzw. der vierten Gangstufe, ist das Schaltelement 14 mit der Innenseite B des zweiten Zahnrades 7 gekoppelt und das Schaltelement 17 mit der Innenseite D des zweiten Zahnrades 13 gekoppelt. Der primäre Kraftfluss läuft dann von der Antriebswelle 2 über das dortige zweite Zahnrad 7 auf das zweite Zahnrad 9 der ersten Vorlegewelle 4 und von dort aus auf das zweite Zahnrad 13 der Abtriebswelle 3.

Zur Realisierung des fünften Ganges bzw. der fünften Gangstufe, ist das Schaltelement 14 mit der Innenseite B des zweiten Zahnrades 7, das Schaltelement 17 mit der Innenseite C des ersten Zahnrades 12 und das Schaltelement 15 mit der Innenseite E des ersten Zahnrades 8 gekoppelt. Der primäre Kraftfluss läuft dann von der Antriebswelle 2 über das dortige zweite Zahnrad 7 auf das zweite Zahnrad 9 der ersten Vorlegewelle 4, und von dem dortigen ersten Zahnrad 8 auf das erste Zahnrad 12 der Abtriebswelle 3.

Schließlich wird zur Realisierung des sechsten Gangs bzw. der sechsten Gangstufe das Schaltelement 14 mit der Innenseite B des zweiten Zahnrades 7, das Schaltelement 17 mit der Innenseite C des ersten Zahnrades 12 und das Schaltelement 16 mit der Innenseite F des ersten Zahnrades 10 gekoppelt. Der primäre Kraftfluss läuft dann von der Antriebswelle 2 über das dortige zweite Zahnrad 7 auf das zweite Zahnrad 11 der zweiten Vorlegewelle 5 und von dort aus über das erste Zahnrad 10 auf das erste Zahnrad 12 der Abtriebswelle 3.

Zusätzlich kann das in den Fig. 1 und Fig. 2 dargestellte Schaltgetriebe 1 als Hybrid-Getriebe ausgeführt werden. Hierzu kann eine Elektromaschine 18 an einer der vier Wellen 2 bis 5 direkt oder indirekt, insbesondere über ein Zahnrad angekoppelt werden. Vzw. wird die Elektromaschine 18 bei der hier dargestellten Ausführungsform des Schaltgetriebes 1 an das erste Zahnrad 6, nämlich insbesondere an die kleinere Zahnstufe der Antriebswelle 2 angekoppelt. Dies ist schematisch insbesondere in Fig. 5 dargestellt, wo in Fig. 5a die Elektromaschine 18 im montierten Zustand und in Fig. 5b die Elektromaschine 18 im demontierten Zustand bzw. das Schaltgetriebe 1 entsprechend dargestellt ist. Für diesen oben beschriebenen Fall, dass die Elektromaschine 18 mit dem ersten Zahnrad 6 der Antriebswelle 2 gekoppelt ist, findet sich entsprechende Schaltung bzw. Realisierung von drei elektrisch realisierten Vorwärtsgängen ebenfalls in der Schaltlogiktabelle gemäß der Fig. 3 im 2. Abschnitt.

So ist für eine elektrisch, realisierte erste Gangstufe dann das Schaltelement 17 mit der Innenseite D des zweiten Zahnrades 13 und das Schaltelement 16 mit der Innenseite F des ersten Zahnrades 10 gekoppelt. Der primäre Kraftfluss läuft dann über das erste Zahnrad 6 auf das erste Zahnrad 10 auf die zweite Vorlegewelle 5 und von hier aus über das zweite Zahnrad 11 auf das zweite Zahnrad 13 der Abtriebswelle 3.
Für die Realisierung eines elektrischen zweiten Gangs bzw. einer elektrischen zweiten Gangstufe ist das Schaltelement 17 mit der Innenseite D des zweiten Zahnrades 13 und das Schaltelement 15 mit der Innenseite E des ersten Zahnrades 8 gekoppelt. Der primäre Kraftfluss läuft dann von dem ersten Zahnrad 6 über das erste Zahnrad 8 auf die erste Vorlegewelle 4 und von dort über das zweite Zahnrad 9 auf das zweite Zahnrad 13 der Antriebswelle 3.

Für die Realisierung eines elektrischen dritten Gangs bzw. einer elektrischen dritten Gangstufe ist das Schaltelement 17 mit der Innenseite C des ersten Zahnrades 12 gekoppelt. Der primäre Kraftfluss läuft dann von dem ersten Zahnrad 6 über das erste Zahnrad 8 direkt auf das erste Zahnrad 12 der Abtriebswelle 3. Der sekundäre Kraftfluss über das erste Zahnrad 10 ist in diesem elektrischen Gang nahezu gleichwertig zum primären Kraftfluss.

In diesen zuvor geschilderten elektrischen ersten, zweiten und dritten Gangstufen kann daher vzw. rein elektrisch gefahren werden. Auch kann sich der Elektromotor 18 hier zum Start des Verbrennungsmotors nutzen lassen, hierzu sind drei Varianten möglich, die in der Fig. 3 in der dortigen Schaltlogiktabelle im untersten Abschnitt dargestellt sind: Zunächst könnte bei Variante 1 über das Schaltelement 14 das erste Zahnrad 6 (über dessen Innenseite A) gekoppelt werden, so dass die Antriebswelle 2 mit der Elektromaschine 18 wirksam verbunden ist. In der zweiten Variante kann mit Hilfe des Schaltelementes 14 das zweite Zahnrad 7 (über dessen Innenseite B) wirksam gekoppelt werden, wobei das Schaltelement 15 wirksam mit dem ersten Zahnrad 8 (über dessen Innenseite E) gekoppelt ist. Der Kraftfluss zum Starten des Verbrennungsmotors würde dann laufen über das erste Zahnrad 6 auf das erste Zahnrad 8, also auf die erste Vorlegewelle 4 und von dort über das zweite Zahnrad 9 auf das zweite Zahnrad 7. In der dritten Variante könnte bspw. das Schaltelement 14 das zweite Zahnrad 7 (über dessen Innenseite B) koppeln und das Schaltelement 16 das erste Zahnrad 10 (über dessen Innenseite F). Der primäre Kraftfluss zum Starten des Verbrennungsmotors würde dann laufen über das erste Zahnrad 6, dann über das zweite Zahnrad 10 auf die zweite Vorlegewelle 5 und von dort über das zweite Zahnrad 11 auf das zweite Zahnrad 7, nämlich so, wie bei den oben geschilderten Varianten auch, auf die Antriebswelle 2 zum Starten des Verbrennungsmotors.

Mit dem erfindungsgemäßen Schaltgetriebe 1 können mehrere Vorteile erzielt werden, die bereits oben erläutert worden sind.

Aufgrund der gleichsinnigen Drehrichtung von Antrieb und Abtrieb ist auch eine gesonderte Achsübersetzung nicht mehr erforderlich. Das Schaltgetriebe kann so ausgelegt werden, dass dieses bereits die Gesamtübersetzung vom Motor, insbesondere vom Verbrennungsmotor bis zum Rad beinhaltet. Dafür sind teilweise größere Abtriebszahnräder notwendig, welche eine Integration des Differenzialgetriebes bzw. des Differenzials in den vorhandenen Bauraum ermöglichen. Anstelle von vierzehn Zahnrädern bei einem Handschaltgetriebe mit sechs Vorwärtsgängen werden hier bei dem erfindungsgemäßen Schaltgetriebe 1 nur acht Zahnräder benötigt. Die Anzahl der Zahnräder ist verringert, wodurch auch die Fertigungskosten reduziert sind.

Aufgrund der axial extrem kurzen Bauweise, realisiert durch die zwei Zahnradebenen I und II und der Schaltelement-Ebene III eignet sich das Getriebe hervorragend für die Ankopplung eines Elektromotors 18 bzw. einer E-Maschine. Je nach Anwendungsfall stehen dafür alle vier Wellen zur Verfügung. Damit sind zusätzlich zu den sechs mechanischen Gängen noch drei gestufte Gänge möglich, in denen rein elektrisch gefahren werden kann. Dies kommt insbesondere der Notwendigkeit eines mit mindestens zwei Gängen schaltbaren Schaltgetriebes entgegen, insbesondere bei einem reinen Elektrofahrzeug. Zudem lässt sich bei der hier vorgestellten neuartigen Getriebestruktur auch die Elektromaschine 18 in drei Varianten zum Start des Verbrennungsmotors nutzen, wie oben geschildert. So zeigt Fig. 5 die bevorzugte Ausführungsform des Schaltgetriebes 1 mit einer Gesamtpreizung von insbesonderen 5,5 und einer Übersetzung in der sechsten Gangstufe von insbesondere 1,95.

### Bezugszeichenliste

- 1: Schaltgetriebe
- 2: Antriebswelle
- 3: Abtriebswelle
- 3a: Teilwelle des Differentials
- 3b: Teilwelle des Differentials
- 4: 1. Vorlegewelle
- 5: 2. Vorlegewelle
- 6: 1. Zahnrad
- 7: 2. Zahnrad
- 8: 1. Zahnrad
- 9: 2. Zahnrad
- 10: 1. Zahnrad
- 11: 2. Zahnrad
- 12: 1. Zahnrad
- 13: 2. Zahnrad
- 14: Schaltelement
- 15: Schaltelement
- 16: Schaltelement
- 17: Schaltelement
- 18: Elektromaschine

- I: erste Radebene
- II: zweite Radebene
- III: Schaltelement-Ebene

- A, B, C, D, E, F: Koppelbare Innenseiten der jeweiligen Zahnräder

## Patentansprüche

1. Automatisches, insbesondere automatisiertes Schaltgetriebe (1) für ein Kraftfahrzeug, mit mindestens einer Antriebswelle (2) und mit mindestens einer Abtriebswelle (3), wobei zusätzlich eine erste und eine zweite Vorlegewelle (4, 5) vorgesehen sind und die einzelnen Achsen der Antriebswelle (2), der Abtriebswelle (3) und der ersten und zweiten Vorlegewelle (4, 5) zueinander parallel verlaufend angeordnet sind, wobei die Antriebswelle (2), die erste und zweite Vorlegewelle (4, 5) und die Abtriebswelle (3) jeweils ein erstes und ein zweites Zahnrad (6, 8, 10, 12 bzw. 7, 9, 11, 13) aufweisen, und wobei einige der Zahnräder als Festräder (9, 11) und die anderen Zahnräder als Losräder (6, 7, 8, 10, 12, 13) ausgebildet sind, wobei alle der jeweils ersten Zahnräder (6, 8, 10, 12) in einer ersten Radebene (1) und alle der jeweils zweiten Zahnräder (7, 9, 11, 13) in einer zweiten Radebene (II) angeordnet sind, **dadurch gekennzeichnet, dass** die Zahnräder (6 bis 13) und/oder Wellen (2, 3, 4, 5) so angeordnet und/oder ausgebildet sind, dass die Zahnräder (6, 8, 10, 12 bzw. 7, 9, 11,13) jeder Radebene (I bzw. II) eine geschlossene Kette bilden, wobei ein jeweiliges Zahnrad (6, 8, 10, 12 bzw. 7, 9, 11, 13) einer Kette immer mit zwei weiteren Zahnrädern der Kette (6, 8, 10, 12 bzw. 7, 9, 11, 13) entsprechend im Eingriff steht.

2. Schaltgetriebe nach Anspruch 1, **dadurch gekennzeichnet, dass** die Wellen (2, 3, 4, 5) so angeordnet und die Zahnräder (6 bis 13), insbesondere bzgl. der Wahl der Zähnezahlen so ausgebildet sind, dass der jeweilige Achsabstand der jeweiligen Wellen (2, 3, 4, 5) zueinander für die erste sowie auch für die zweite Radebene (1 bzw. II) identisch ist.

3. Schaltgetriebe nach Anspruch 1 oder 2, **dadurch gekennzeichnet, dass** beim Schliessen der Kette der ersten Radebene **(I)** bzw. bein Schliessen der Kette der zweiten Radebene (II) das Verzahnungsgesetz "Zahn in Lücke" in den jeweiligen Radebenen (I bzw. II). gleichzeitig erfüllt ist.

4. Schaltgetriebe nach einem der vorstehenden Ansprüche, **dadurch gekennzeichnet, dass** der Kraftfluss, insbesondere zur Realisierung von sechs unterschiedlichen Gangstufen über die Ansteuerung entsprechender Schaltelemente (14, 15, 16, 17) und entsprechende Losräder (6, 7, 8, 10, 12, 13) steuerbar ist und die Schaltelemente (14, 15, 16, 17) in einer Schaltelement-Ebene (III) angeordnet sind.

5. Schaltgetriebe nach einem der vorstehenden Ansprüche, **dadurch gekennzeichnet, dass** das erste und zweite Zahnrad (6, 7) der Antriebswelle (2) als Losrad ausgeführt ist.

6. Schaltgetriebe nach einem der vorstehenden Ansprüche, **dadurch gekennzeichnet, dass** das erste Zahnrad (8) der ersten Vorlegewelle (4) als Losrad und das zweite Zahnrad (9) der ersten Vorlegewelle (4) als Festrad ausgeführt ist.

7. Schaltgetriebe nach einem der vorstehenden Ansprüche, **dadurch gekennzeichnet, dass** das erste Zahnrad (10) der zweiten Vorlegewelle (5) als Losrad und das zweite Zahnrad (11) der zweiten Vorlegewelle (5) als Festrad ausgebildet ist.

8. Schaltgetriebe nach einem der vorstehenden Ansprüche, **dadurch gekennzeichnet, dass** das erste und zweite Zahnrad (12, 13) der Abtriebswelle (3) jeweils als Losrad ausgeführt ist, insbesondere zugleich auch als Komponente eines Differentials ausgeführt ist.

9. Schaltgetriebe nach einem der vorstehenden Ansprüche, **dadurch gekennzeichnet, dass** das Schaltgetriebe (1) zusätzlich als Hybrid-Getriebe ausgeführt ist, nämlich eine Elektromaschine (18) an eine der vier Wellen direkt oder indirekt, d.h. über ein Zahnrad, angekoppelt ist.

10. Schaltgetriebe nach Anspruch 9, **dadurch gekennzeichnet, dass** die Elektromaschine (18) an ein Zahnrad, insbesondere an die kleinere Zahnrad (6) der Antriebswelle (2) angekoppelt ist.

## Claims

1. Automatic, in particular automated change-speed gearbox (1) for a motor vehicle, having at least one drive shat (2) and having at least one output shaft (3), a first and a second idler shaft (4, 5) additionally being provided and the individual axes of the drive shaft (2), the output shaft (3) and the first and second idler shafts (4, 5) being arranged so as to run parallel to one another, the drive shaft (2), the first and second idler shafts (4, 5) and the output shaft (3) in each case having a first and a second gearwheel (6, 8, 10, 12 and 7, 9, 11, 13), and some of the gearwheels being configured as fixed gears (9, 11) and the other gearwheels being configured as movable gears (6, 7, 8, 10, 12, 13), all of the in each case first gearwheels (6, 8, 10, 12) being arranged in a first gear plane I) and all of the in each case second gearwheels (7, 9, 11, 13) being arranged in a second gear plane (II), **characterized in that** the gearwheels (6 to 13) and/or shafts (2, 3, 4, 5) are arranged and/or configured in such a way that the gearwheels (6, 8, 10, 12 and 7, 9, 11, 13) of each gear plane (I and II, respectively) form a closed chain, a corresponding gearwheel (6, 8, 10, 12 and 7, 9, 11, 13) of one chain always being in engagement correspondingly with two further gearwheels of the chain (6, 8, 10, 12 and 7, 9, 11, 13, respectively).

2. Change-speed gearbox according to Claim 1, **characterized in that** the shafts (2, 3, 4, 5) are arranged in such a way and the gearwheels (6 to 13) are configured, in particular with regard to the selection of the tooth numbers, in such a way that the respective axial spacing of the respective shafts (2, 3, 4, 5) from one another is identical for the first and for the second gear plane (I and II).

3. Change-speed gearbox according to Claim 1 or 2, **characterized in that**, during the closing of the chain of the first gear plane (I) and during the closing of the chain of the second gear plane (II), the gearing law "tooth in gap" is met at the same time in the respective gear planes (I and II).

4. Change-speed gearbox according to one of the preceding claims, **characterized in that** the force flow, in particular in order to realize six different gear stages, can be controlled via the actuation of corresponding shifting elements (14, 15, 16, 17) and corresponding movable gears (6, 7, 8, 10, 12, 13), and the shifting elements (14,15, 16, 17) are arranged in a shifting-element plane (III).

5. Change-speed gearbox according to one of the preceding claims, **characterized in that** the first and second gearwheels (6, 7) of the drive shaft (2) are configured as movable gears.

6. Change-speed gearbox according to one of the preceding claims, **characterized in that** the first gearwheel (8) of the first idler shaft (4) is configured as a movable gear and the second gearwheel (9) of the first idler shaft (4) is configured as a fixed gear.

7. Change-speed gearbox according to one of the preceding claims, **characterized in that** the first gearwheel (10) of the second idler shaft (5) is configured as a movable gear and the second gearwheel (11) of the second idler shaft (5) is configured as a fixed gear.

8. Change-speed gearbox according to one of the preceding claims, **characterized in that** the first and second gearwheels (12, 13) of the output shaft (3) are configured in each case as a movable gear, in particular are also configured at the same time as a component of a differential.

9. Change-speed gearbox according to one of the preceding claims, **characterized in that** the change-speed gearbox (1) is additionally configured as a hybrid transmission, namely an electric machine (18) is coupled to one of the four shafts directly or indirectly, that is to say via a gearwheel.

10. Change-speed gearbox according to Claim 9, **characterized in that** the electric machine (18) is coupled to a gearwheel, in particular to the smaller gearwheel (6) of the driveshaft (2).

## Revendications

1. Boîte de vitesses (1) automatique, notamment automatisée, pour un véhicule automobile, comprenant au moins un arbre d'entraînement (2) et comprenant au moins un arbre de sortie (3), un premier et un deuxième arbre intermédiaire (4, 5) étant en outre prévus et les axes individuels de l'arbre d'entraînement (2), de l'arbre de sortie (3) et des premier et deuxième arbres intermédiaires (4, 5) étant disposés de manière à s'étendre parallèlement les uns aux autres, l'arbre d'entraînement (2), les premier et deuxième arbres intermédiaires (4, 5) et l'arbre de sortie (3) comprenant respectivement une première et une deuxième roue dentée (6, 8, 10, 12 ou 7, 9, 11, 13), et certaines des roues dentées étant réalisées sous forme de roues fixes (9, 11) et les autres roues dentées étant réalisées sous forme de roues folles (6, 7, 8, 10, 12, 13), toutes les premières roues dentées respectives (6, 8, 10, 12) étant disposées dans un premier plan de roues (I) et toutes les deuxièmes roues dentées respectives (7, 9, 11, 13) étant disposées dans un deuxième plan de roues (II), **caractérisée en ce que** les roues dentées (6 à 13) et/ou les arbres (2, 3, 4, 5) sont disposés et/ou réalisés de telle sorte que les roues dentées (6, 8, 10, 12 ou 7, 9, 11, 13) de chaque plan de roues (I ou II) forment une chaîne fermée, une roue dentée respective (6, 8, 10, 12 ou 7, 9, 11, 13) d'une chaîne s'engrenant toujours de manière correspondante avec deux autres roues dentées (6, 8, 10, 12 ou 7, 9, 11, 13) de la chaîne.

2. Boîte de vitesses selon la revendication 1, **caractérisée en ce que** les arbres (2, 3, 4, 5) sont disposés de telle sorte, et les roues dentées (6 à 13) sont réalisées, en particulier en ce qui concerne le choix des nombres de dents, de telle sorte que l'écartement respectif des axes des arbres respectifs (2, 3, 4, 5) les uns par rapport aux autres est identique pour le premier ainsi que pour le deuxième plan de roues (I ou II).

3. Boîte de vitesses selon la revendication 1 ou 2, **caractérisée en ce que**, lors de la fermeture de la chaîne du premier plan de roues (I) ou lors de la fermeture de la chaîne du deuxième plan de roues (II), la loi d'engrènement « dent dans entredent » est satisfaite simultanément dans les plans de roues respectifs (I ou II).

4. Boîte de vitesses selon l'une quelconque des revendications précédentes, **caractérisée en ce que** le flux de force peut être commandé par le biais de la commande d'éléments de changement de vitesse correspondants (14, 15, 16, 17) et de roues folles correspondantes (6, 7, 8, 10, 12, 13), en particulier en vue de la réalisation de six rapports de vitesse différents, et les éléments de changement de vitesse (14, 15, 16, 17) sont disposés dans un plan d'éléments de changement de vitesse (III).

5. Boîte de vitesses selon l'une quelconque des revendications précédentes, **caractérisée en ce que** la première et la deuxième roue dentée (6, 7) de l'arbre d'entraînement (2) sont réalisées sous forme de roue folle.

6. Boîte de vitesses selon l'une quelconque des revendications précédentes, **caractérisée en ce que** la première roue dentée (8) du premier arbre intermédiaire (4) est réalisée sous forme de roue folle et la deuxième roue dentée (9) du premier arbre intermédiaire (4) est réalisée sous forme de roue fixe.

7. Boîte de vitesses selon l'une quelconque des revendications précédentes, **caractérisée en ce que** la première roue dentée (10) du deuxième arbre intermédiaire (5) est réalisée sous forme de roue folle et la deuxième roue dentée (11) du deuxième arbre intermédiaire (5) est réalisée sous forme de roue fixe.

8. Boîte de vitesses selon l'une quelconque des revendications précédentes, **caractérisée en ce que** la première et la deuxième roue dentée (12, 13) de l'arbre de sortie (3) sont réalisées respectivement sous forme de roue folle, en particulier en même temps également sous forme de composant d'un différentiel.

9. Boîte de vitesses selon l'une quelconque des revendications précédentes, **caractérisée en ce que** la boîte de vitesses (1) est en outre réalisée sous forme de transmission hybride, à savoir une machine électrique (18) est accouplée directement ou indirectement, c'est-à-dire par le biais d'une roue dentée, à l'un des quatre arbres.

10. Boîte de vitesses selon la revendication 9, **caractérisée en ce que** la machine électrique (18) est accouplée à une roue dentée, en particulier à la plus petite roue dentée (6) de l'arbre d'entraînement (2).
